# FASCICULE DE BREVET EUROPEEN

(11) **EP 3 198 540 B1**
(45) Date de publication et mention de la délivrance du brevet: **04.07.2018**
(21) Numéro de dépôt: 15767170.2
(22) Date de dépôt: 24.09.2015
(51) Int. Cl.: G06Q 20/40

(54) **PROCÉDÉ D'AUTO-DÉTECTION D'UNE TENTATIVE DE PIRATAGE D'UNE CARTE ÉLECTRONIQUE DE PAIEMENT, CARTE, TERMINAL ET PROGRAMME CORRESPONDANTS**
VERFAHREN ZUR AUTOMATISCHEN ERKENNUNG VON VERSUCHTER PIRATERIE EINER ELEKTRONISCHEN BEZAHLKARTE, ZUGEHÖRIGE KARTE, ENDGERÄT UND PROGRAMM
METHOD OF AUTO-DETECTION OF ATTEMPTED PIRACY OF AN ELECTRONIC PAYMENT CARD, CORRESPONDING CARD, TERMINAL AND PROGRAMME

(30) Priorité: 26.09.2014 FR 1459134
(43) Date de publication de la demande: 02.08.2017
(73) Titulaire: Ingenico Group, 75015 Paris (FR)
(72) Inventeur: NACCACHE, David, F-75018 Paris (FR); MAYER, Laurent, F-95800 Courdimanche (FR)
(74) Mandataire: Vidon Brevets & Stratégie
(86) Numéro de dépôt international: PCT/EP2015/071955
(87) Numéro de publication internationale: WO 2016/046307

(56) Documents cités:
- EP-A1- 2 085 921
- TENG H S ET AL: "Adaptive real-time anomaly detection using inductively generated sequential patterns", PROCEEDINGS OF THE SYMPOSIUM ON RESEARCH IN SECURITY AND PRIVACY. OAKLAND, MAY 7 - 9, 1990; [PROCEEDINGS OF THE SYMPOSIUM ON RESEARCH IN SECURITY AND PRIVACY], LOS ALAMITOS, IEEE COMP. SOC. PRESS, US, vol. SYMP. 11, 7 mai 1990 (1990-05-07), pages 278-284, XP010020205, DOI: 10.1109/RISP.1990.63857 ISBN: 978-0-8186-2060-7

## Description

### 1. Domaine de l'invention

L'invention se rapporte au domaine du paiement électronique et plus particulièrement à la sécurisation des cartes électroniques de paiement.

### 2. Art Antérieur

Les cartes de paiement font l'objet de nombreuses tentatives d'attaques. En effet, de par la nature des informations qu'elle contient et la sensibilité des données qu'elle permet de traiter, la carte électronique de paiement est un objet qui possède une grande valeur pour des personnes malveillantes.

Un certain type de fraude tend à prendre de l'ampleur : il s'agit du « *skimming* », opération frauduleuse qui consiste d'abord à effectuer une copie de la bande magnétique de la carte à l'aide d'un dispositif spécial sans que le possesseur de la carte ne le remarque, par exemple lorsque la carte est insérée dans un distributeur automatique de billets. Ces données sont ensuite reportées sur une carte vierge pour une utilisation ultérieure. Parallèlement, les fraudeurs ont également récupéré le code confidentiel saisi par le possesseur de la carte, par exemple à l'aide d'une caméra cachée ou d'un dispositif placé sur ou sous le clavier du distributeur automatique de billets.

Une fois en possession de la carte falsifiée et du code confidentiel, les fraudeurs peuvent ainsi effectuer des transactions ou même accéder au compte bancaire de l'utilisateur. Et comme l'utilisateur n'a rien remarqué et qu'il est toujours en possession de la carte d'origine, ce n'est qu'au moment de consulter le solde de son compte qu'il remarquera qu'il est victime d'escroquerie.

Ainsi, pour pirater et cloner une carte bancaire, un fraudeur a besoin de deux types d'information : les données stockées sur la carte (coordonnées bancaires) et le code confidentiel personnel à 4 chiffres.

Une solution pour lutter contre ce type de fraude consiste à tenter de détecter les dispositifs piratés, comme les distributeurs automatiques de billets, par exemple en informant les utilisateurs de façon précise pour qu'ils puissent reconnaître lorsqu'un distributeur a été piraté (par exemple lorsque la fente d'insertion de la carte paraît suspecte). Cette solution n'est en revanche pas très efficace, dans la mesure où les fraudeurs prennent de plus en plus de précautions pour ne pas être détectés.

Une autre solution, également à mettre en oeuvre par l'utilisateur, consiste à prendre plus de précautions lors de la saisie d'un code confidentiel, en mettant la main au-dessus du clavier par exemple, de manière à déjouer une partie du piratage basée sur la caméra filmant la saisie du code. De la même manière, cette solution n'est pas très efficace dans la mesure où l'utilisateur ne sait pas où se trouve cette caméra et dans la mesure où tous les utilisateurs ne pensent pas à prendre ce type de précautions. Le document D1: EP 2 085 921 A1 (INTELLIGENT WAVE INC [JP]) décrit la détection d'une possible fraude par une carte électronique et la demande de l'approbation d'une transaction à un ordinateur appartenant à une unité bancaire avant d'effectuer ladite transaction. Les techniques existantes sont donc limitées à la détection de dispositifs piratés ou à la vigilance des utilisateurs pour déjouer de telles fraudes.

Il existe donc un besoin de fournir une technique qui permette de détecter une fraude/tentative de fraude par modification d'une carte bancaire d'un utilisateur et qui permette de se prémunir des effets négatifs d'une telle fraude.

### 3. Résumé de l'invention

L'invention propose une solution nouvelle qui ne présente pas l'ensemble de ces inconvénients de l'art antérieur, sous la forme d'un procédé d'auto-détection d'une tentative de piratage d'une carte électronique de paiement, selon les revendications indépendantes 1, 5, 6 et Ainsi, on propose une solution nouvelle et inventive de la détection de fraude à la carte bancaire mettant notamment en oeuvre le piratage par copie des données d'une carte bancaire (ainsi que l'obtention du code confidentiel correspondant), basée sur l'auto-détection, par la carte elle-même, d'une tentative de piratage.

Pour ce faire, la carte bancaire détecte elle-même que des opérations mises en oeuvre par le fraudeur (consistant à lire les données de la carte sans toutefois mettre en oeuvre une transaction complète) sont suspectes et mémorise un statut particulier représentatif d'une tentative de piratage.

Ensuite, lorsque la même carte est utilisée par un dispositif authentique, la carte communique son statut suspect, de façon à ce que l'utilisateur de la carte ou du dispositif soit alerté.

De cette manière, si l'utilisateur n'a pas détecté le dispositif frauduleux (par exemple un distributeur automatique de billets modifié) permettant un piratage de sa carte bancaire par copie des données de la carte et obtention via une caméra de son code confidentiel lors de sa saisie, la solution proposée permet de détecter ce piratage dès l'utilisation suivante de la carte piratée.

L'utilisateur est alors informé que sa carte est piratée et qu'il doit contacter sa banque pour la bloquer et empêcher d'ultérieures utilisations frauduleuses.

La solution proposée n'est donc pas basée, contrairement aux techniques préventives peu efficaces de l'art antérieur, sur la détection de dispositifs modifiés pour permettre un piratage, mais elle est basée sur l'auto-détection par la carte elle-même d'une tentative de piratage ou d'un piratage avéré.

Selon une caractéristique particulière de l'invention, l'étape de détection d'une séquence d'opérations suspectes comprend la détection d'une séquence d'opérations ne correspondant pas à une séquence prédéterminée d'opérations permettant la réalisation complète d'une transaction bancaire.

Ainsi, selon ce mode de réalisation particulier, la carte bancaire détecte elle-même que les opérations mises en oeuvre par le fraudeur ne correspondent pas à une séquence complète d'opérations nécessaires à la réalisation d'une transaction et sont donc suspectes.

En effet, toutes les opérations autorisées pour une carte de paiement électronique sont connues et normalisées, et permettent notamment la finalisation d'une transaction. Ainsi, lorsque seulement certaines des opérations appartenant à une séquence de transaction sont mises en oeuvre, la carte peut détecter un comportement anormal et donc mémoriser un statut suspect, représentatif d'une tentative de piratage.

Par exemple, l'entité distincte correspond à un terminal de paiement électronique et l'étape d'authentification correspond à une étape de mise en oeuvre d'une transaction complète via le terminal de paiement électronique.

Ainsi, selon ce mode de réalisation particulier, la carte bancaire est capable d'authentifier elle-même une entité distincte, par exemple un terminal de paiement électronique.

En effet, lorsqu'une transaction complète est mise en oeuvre, dans un terminal de paiement électronique, avec la carte, celle-ci en déduit que le terminal de paiement électronique est authentique et qu'elle peut lui communiquer son statut particulier (préalablement mémorisé) représentatif d'une tentative de fraude, pour l'alerter.

Ainsi, lorsque la carte préalablement piratée est utilisée, de manière classique, pour une transaction complète via un terminal de paiement électronique authentique, la carte, encore insérée dans le terminal de paiement électronique, déclenche la communication de son statut suspect vers le terminal de paiement électronique.

Selon un aspect particulier, l'étape de détection est sécurisée et la mémorisation du statut suspect est garantie quelles que soient les opérations mises en oeuvre.

Ainsi, selon ce mode de réalisation particulier, la carte bancaire peut détecter une séquence d'opérations suspectes quelles que soient ces opérations, y compris si elles incluent une remise à zéro de certaines données de la carte.

En effet, la mémorisation du statut suspect concerne une zone protégée de la mémoire de la carte.

Par exemple, l'étape de communication comprend une sous-étape de transmission d'au moins une commande d'affichage d'un message d'alerte sur un écran de l'entité distincte.

Ainsi, selon ce mode de réalisation particulier, la communication de son statut suspect par la carte permet par exemple d'afficher directement une alerte sur l'écran du terminal de paiement électronique dans lequel la carte est insérée, ou avec lequel la carte a mis en oeuvre la transaction complète.

De cette manière, l'utilisateur porteur de la carte piratée et/ou le commerçant en possession du terminal de paiement électronique, peut visualiser le message d'alerte et ainsi être informé d'une possible tentative de piratage de la carte.

Selon une caractéristique particulière de l'invention, le procédé comprend une étape de traitement, dans l'entité distincte, du statut suspect communiqué par la carte.

Ainsi, selon ce mode de réalisation particulier, l'entité authentifiée ayant reçu le statut représentatif d'une tentative de fraude par la carte met en oeuvre une étape de traitement de ce statut, afin d'alerter le porteur de la carte par exemple, ou bien l'utilisateur de l'entité authentifiée (le commerçant utilisant un terminal de paiement électronique).

Par exemple, le traitement du statut entraine l'affichage d'un message d'alerte sur un écran de l'entité authentifiée, ou encore génère l'émission d'un signal sonore d'alerte.

Selon un autre exemple, ce traitement consiste à émettre un message à destination d'un serveur distant (par exemple le serveur bancaire avec lequel la transaction précédente a été effectuée), ce serveur informant ensuite directement le porteur de la carte ou l'utilisateur de l'entité authentifiée de la tentative de fraude sur la carte.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée, selon un mode de réalisation particulier;
- la figure 2 présente un diagramme de séquences de la technique proposée, selon un mode de réalisation particulier ;
- les figures 3a et 3b présentent deux exemples d'une carte de paiement électronique selon un mode de réalisation particulier de la technique proposée ;
- la figure 4 présente un exemple d'un terminal de paiement selon un mode de réalisation particulier de la technique proposée.

### 5. Description

### 5.1. Principe général

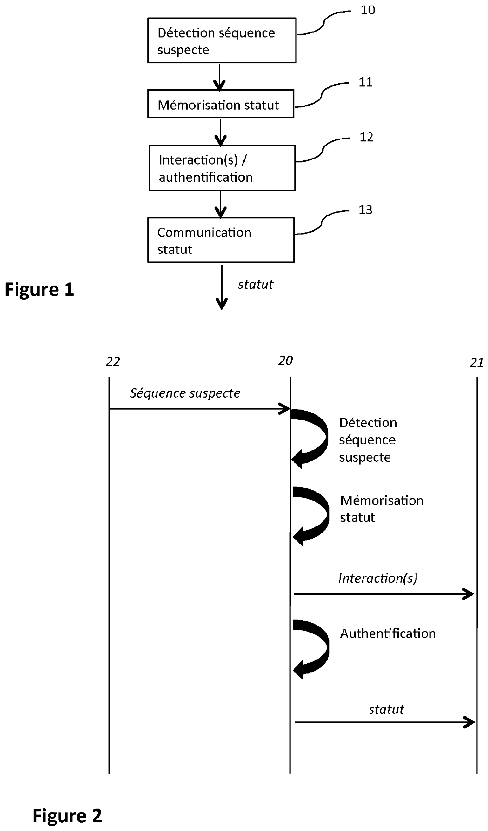

Le principe général de la technique proposée, décrit en relation avec les figures 1 et 2, est basé sur l'auto-détection, par une carte de paiement électronique, d'une fraude ou tentative de fraude sur cette carte et sur la mémorisation, par la carte, d'un statut suspect en vue de sa communication ultérieure à une entité distincte préalablement authentifiée.

Ainsi, la carte de paiement électronique est capable de détecter des interactions suspectes entre une entité distincte et elle-même, et de mémoriser un état/statut suspect y relatif. Ensuite, lorsque la même carte est utilisée dans une entité qu'elle est capable d'authentifier, la carte communique à cette entité son statut suspect, de façon à alerter un ou plusieurs utilisateurs de la tentative de fraude (ou de la fraude avérée).

Pour ce faire, la carte de paiement électronique comprend des moyens spécifiques, selon les différents modes de réalisation décrits ci-après.

### 5.2. Description de modes de réalisation

On décrit maintenant, en relation avec la figure 1, les principales étapes du procédé d'auto-détection mises en oeuvre dans une carte de paiement électronique. La première étape de détection 10 consiste à détecter, par la carte elle-même, une séquence d'opérations/interactions suspectes, par exemple lorsque cette carte est insérée dans un terminal de paiement électronique, un accessoire de paiement ou un distributeur de billets.

Par exemple, cette séquence d'opérations jugées suspectes correspond à une partie seulement des opérations prédéterminées (par exemple les étapes d'une transaction telle que définies par la norme EMV, pour « Europay Mastercard Visa ») nécessaires à la mise en oeuvre d'une transaction bancaire. Ainsi, la carte de paiement électronique selon ce mode de réalisation de l'invention détecte une séquence suspecte lorsqu'un arrêt est détecté dans une quelconque des étapes prédéterminées obligatoires. Une telle séquence considérée comme suspecte entraine la mémorisation, lors d'une étape 11, par la carte elle-même, d'un statut suspect.

Par exemple, cette mémorisation 11 consiste à modifier un bit de statut dans une partie spécifique de la mémoire de la puce électronique de la carte ou à mémoriser une suite particulière de bits (correspondant à des commandes à exécuter par le dispositif récepteur de cette suite de bits par exemple) dans une partie spécifique de la mémoire de la puce électronique de la carte.

Selon ce mode de réalisation particulier, la mémorisation du statut suspect de la carte est toujours possible, quelles que soient les opérations mises en oeuvre sur la carte. Ainsi, si la fraude consiste à copier puis effacer tout ou partie de la mémoire de la carte, la zone de mémorisation du statut suspect est sauvegardée. Par exemple, cette mémorisation est effectuée dans une zone spécifique de la mémoire non accessible à un éventuel fraudeur, ou non effaçable.

Ce mode de réalisation constitue seulement un exemple de réalisation, non limitatif et il est clair que de nombreux autres modes de réalisation de l'invention peuvent être envisagés pour mémoriser le statut par la carte.

Une fois le statut mémorisé, la carte de paiement électronique peut alors le communiquer, le cas échéant, à tout dispositif de confiance, de façon à alerter un utilisateur, par exemple le porteur de la carte, de la fraude ou tentative de fraude.

Par exemple, lorsque la carte de paiement électronique est utilisée, après la tentative de piratage, par un utilisateur, dans un terminal de paiement électronique ou un distributeur de billets, la carte communique son statut suspect, dès lors qu'elle est en mesure d'authentifier le dispositif en question.

Pour ce faire, lorsque la carte est à nouveau en interaction avec une entité distincte, elle met en oeuvre une étape 12 d'authentification de cette entité, afin de pouvoir ensuite, lors d'une étape 13, lui communiquer son statut suspect.

Par exemple, lorsque la carte détecte cette fois qu'une transaction bancaire complète est mise en oeuvre avec l'entité distincte, cette dernière est considérée comme authentique par la carte. En effet, un terminal de paiement électronique, ou un distributeur de billets, permettant une transaction bancaire complète peut être considéré comme authentique et de confiance par la carte de paiement électronique. Une telle entité authentifiée permet de plus la communication du statut suspect de la carte, voire même une alerte immédiate via les moyens d'affichage de cette entité.

Ainsi, lors de l'utilisation de la carte bancaire (pour une transaction dans un terminal de paiement électronique ou un retrait d'argent dans un distributeur de billets), la carte de paiement électronique piratée « profite » de son interaction avec une entité distincte qu'elle juge authentique pour communiquer son statut suspect (mémorisé antérieurement lors d'un piratage ou une tentative de piratage).

Ensuite, l'entité distincte ayant reçu cette communication de statut suspect de la carte de paiement électronique met en oeuvre une ou plusieurs étapes permettant de tenir compte de ce statut suspect pour émettre une alerte.

Par exemple, la réception du statut suspect en provenance de la carte déclenche automatiquement l'affichage, par des moyens de restitution de l'entité distincte (l'écran d'un terminal de paiement électronique), d'un message d'alerte indiquant que la carte a subi une tentative de piratage ou un piratage et qu'elle doit être vérifiée.

Selon un autre exemple, la lecture du statut suspect communiqué déclenche l'exécution d'une ou plusieurs commandes permettant l'affichage, par des moyens de restitution de l'entité distincte, d'un message d'alerte indiquant que la carte a subi une tentative de piratage ou un piratage et qu'elle doit être vérifiée.

Selon encore un autre exemple, la lecture du statut suspect communiqué déclenche l'exécution d'une ou plusieurs commandes permettant la transmission, par l'entité distincte, à un serveur distant (par exemple le serveur de l'organisme bancaire émetteur de la carte) ou un dispositif préalablement identifié (par exemple le téléphone portable du porteur de la carte), d'une alerte, de façon à informer un utilisateur préalablement identifié (le porteur de la carte par exemple).

Les étapes décrites ci-dessus sont également illustrées en figure 2, sous la forme d'un diagramme de séquences impliquant un dispositif piraté 22, la carte de paiement électronique 20 objet de l'invention et une entité distincte authentifiée 21.

Selon un mode de réalisation particulier, la carte de paiement électronique 20 détecte une séquence d'opérations suspectes, en interaction avec un dispositif 22 (par exemple un distributeur de billets piraté). Par exemple, la carte détecte que seulement certaines des étapes nécessaires à la mise en oeuvre d'une transaction bancaires sont mises en oeuvre et en déduit qu'elle subit un piratage ou une tentative de piratage. Elle mémorise alors un statut particulier dit « suspect », afin de pouvoir ensuite, dès que possible, communiquer ce statut à une entité apte à alerter de cette tentative de piratage.

Ainsi, lorsque la carte 20 entre à nouveau en interaction avec une entité distincte 21 (un distributeur de billets, un terminal de paiement électronique, un accessoire de paiement ...), elle s'assure de son authenticité pour ensuite lui communiquer son statut suspect.

Par exemple, la carte 20 déduit que le terminal de paiement électronique 21 dans lequel elle est insérée est authentique lorsqu'une transaction bancaire complète a été mise en oeuvre, c'est-à-dire lorsque toutes les étapes/opérations prédéterminées nécessaires à une transaction ont été effectuées. Dès lors que l'entité distincte 21 en interaction avec la carte 20 est authentifiée, cette dernière peut lui communiquer son statut suspect.

L'entité distincte 21 authentifiée peut alors traiter ce statut suspect de façon à générer une alerte, en affichant un message sur son écran par exemple, ou en émettant un message d'alerte à destination d'un serveur distant ou d'un dispositif préalablement identifié (par exemple le téléphone portable du porteur de carte).

Ainsi, selon les différents modes de réalisation décrits précédemment, l'invention permet l'auto-détection, par une carte de paiement, d'un piratage ou d'une tentative de piratage et la communication, dès que possible, à une entité distincte authentifiée, d'un statut suspect mémorisé par la carte.

La fraude est donc détectée par la carte elle-même et divulguée rapidement (dès l'utilisation suivante de la carte pour un paiement par exemple) de façon à permettre à l'utilisateur de prendre les mesures nécessaires pour que le piratage ait le moins d'effets négatifs possibles. En effet, si l'utilisateur est alerté rapidement après le piratage, il peut y mettre fin sans attendre, alors qu'actuellement il ne peut se rendre compte de la fraude que lorsqu'il consulte son compte et que de nombreuses transactions frauduleuses ont potentiellement déjà été effectuées.

### 5.3. Autres caractéristiques et avantages

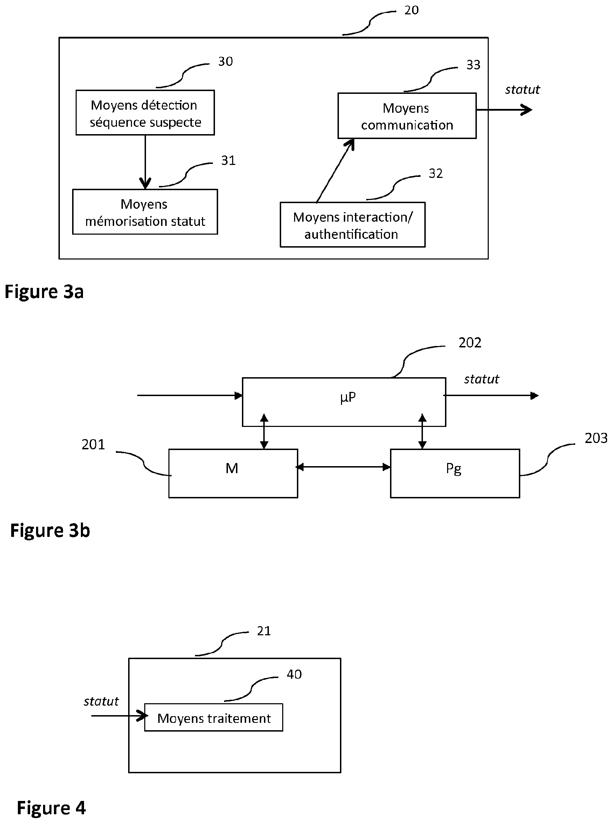

On décrit, en relation avec les figures 3a et 3b, un exemple de carte de paiement électronique comprenant des moyens d'exécution du procédé d'auto-détection d'une tentative de piratage décrit préalablement.

Ainsi, comme illustré en figure 3a, une telle carte de paiement électronique 20 comprend des moyens de détection 30 d'une séquence d'opérations suspectes. La carte de paiement électronique 20 comprend également des moyens de mémorisation 31 d'un statut suspect, lorsqu'une séquence suspecte a été détectée. La carte de paiement électronique 20 comprend également des moyens d'interaction et d'authentification 32 ainsi que des moyens de communication 33 du statut préalablement mémorisé par les moyens 31.

On décrit maintenant cette carte de paiement électronique 20 en relation avec la figure 3b.

Par exemple, la carte de paiement électronique 20 comprend une mémoire 201 constituée d'une mémoire tampon, une unité de traitement 202, équipée par exemple d'un microprocesseur, et pilotée par le programme d'ordinateur 203, mettant en oeuvre le procédé d'auto-détection d'une tentative de piratage tel que décrit précédemment.

À l'initialisation, les instructions de code du programme d'ordinateur 203 sont par exemple chargées dans une mémoire avant d'être exécutées par le processeur de l'unité de traitement 202. L'unité de traitement 202 reçoit en entrée par exemple une séquence d'opérations, en interaction la carte 20. Le microprocesseur de l'unité de traitement 202 met en oeuvre les étapes du procédé d'auto-détection d'une tentative de piratage, selon les instructions du programme d'ordinateur 203, pour communiquer un statut suspect.

Pour cela, la carte de paiement électronique 20 comprend, outre la mémoire tampon 201, des moyens de détection 30 d'une séquence d'opérations suspectes, des moyens de mémorisation 31 d'un statut suspect, lorsqu'une séquence suspecte a été détectée, des moyens d'interaction et d'authentification 32 ainsi que des moyens de communication 33 du statut préalablement mémorisé par les moyens 31.

On décrit enfin, en relation avec la figure 4, un exemple de terminal de paiement électronique 21 comprenant des moyens de traitement 40 d'un statut reçu en provenance d'une carte de paiement mettant en oeuvre le procédé d'auto-détection d'une tentative de piratage. Ces moyens de traitement 40 comprennent par exemple des moyens de lecture du statut reçu, des moyens d'exécution de commande(s) comprises dans le statut reçu, comme par exemple des moyens d'affichage d'une alerte ou d'émission d'un message d'alerte vers une autre entité distante.

## Revendications

1. Procédé d'auto-détection d'une tentative de piratage d'une carte électronique de paiement, **caractérisé en ce qu'**il comprend les étapes suivantes, mises en oeuvre par ladite carte :
• détection (10) d'une séquence d'opérations suspectes mises en oeuvre en interaction avec ladite carte, comprenant la détection d'une séquence d'opérations ne correspondant pas à une séquence prédéterminée d'opérations permettant la réalisation complète d'une transaction bancaire, et mémorisation (11), dans ladite carte, d'un statut correspondant, dit statut suspect ;
• interaction (12) de ladite carte avec une entité distincte, correspondant à un terminal de paiement électronique, et authentification (12), par ladite carte, de ladite entité distincte, l'authentification correspondant à une étape de mise en oeuvre d'une transaction complète via ledit terminal de paiement électronique ;
• communication (13), par ladite carte, dudit statut suspect mémorisé à ladite entité distincte authentifiée correspondant audit terminal de paiement électronique.

2. Procédé de détection selon la revendication 1, **caractérisé en ce que** ladite étape de détection est sécurisée et ladite mémorisation dudit statut suspect est mise en oeuvre dans une zone spécifique protégée de la mémoire de ladite carte, de sorte à ce que ladite mémorisation soit garantie quelles que soient lesdites opérations mises en oeuvre.

3. Procédé de détection selon l'une quelconque des revendications 1 à 2, **caractérisé en ce que** ladite étape de communication comprend une sous-étape de transmission d'au moins une commande d'affichage d'un message d'alerte sur un écran de ladite entité distincte.

4. Procédé de détection selon l'une quelconque des revendications 1 à 3, **caractérisé en ce qu'**il comprend une étape de traitement, dans ladite entité distincte, dudit statut suspect communiqué par ladite carte.

5. Carte électronique de paiement comprenant des moyens d'auto-détection d'une tentative de piratage, **caractérisée en ce qu'**elle comprend les moyens suivants :
• moyens (30) de détection d'une séquence d'opérations suspectes mises en oeuvre en interaction avec ladite carte, comprenant des moyens de détection d'une séquence d'opérations ne correspondant pas à une séquence prédéterminée d'opérations permettant la réalisation complète d'une transaction bancaire, et moyens (31) de mémorisation, dans ladite carte, d'un statut correspondant, dit statut suspect ;
• moyens (32) d'interaction de ladite carte avec une entité distincte, correspondant à un terminal de paiement électronique, et moyens (32) d'authentification, par ladite carte, de ladite entité distincte, lesdits moyens d'authentification correspondant à des moyens de mise en oeuvre d'une transaction complète via ledit terminal de paiement électronique ;
• moyens (33) de communication, par ladite carte, dudit statut suspect mémorisé à ladite entité distincte authentifiée, correspondant à un terminal de paiement électronique.

6. Terminal de paiement électronique comprenant des moyens de traitement d'un statut suspect reçu en provenance d'une carte électronique de paiement selon la revendication 5, lesdits moyens de traitement comprenant :
• des moyens de lecture dudit statut suspect reçu ;
• des moyens d'exécution de commande(s) comprises dans ledit statut suspect reçu ;
• des moyens d'émission d'un message d'alerte.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon l'une quelconque des revendications 1 à 4, lorsqu'il est exécuté sur un ordinateur.

## Patentansprüche

1. Verfahren zur automatischen Erkennung von versuchter Piraterie einer elektronischen Bezahlkarte, **dadurch gekennzeichnet, dass** es die folgenden Schritte aufweist, die von der Karte umgesetzt werden:
• Erkennen (10) von einer Abfolge von verdächtigen Vorgängen, die in Zusammenwirken mit der Karte umgesetzt werden, umfassend das Erkennen einer Abfolge von Vorgängen, die einer vorbestimmten Abfolge von Vorgängen nicht entspricht, die die vollständige Durchführung einer Banktransaktion erlaubt, und Speichern (11) eines entsprechenden Status in der Karte, der verdächtiger Status genannt wird;
• Zusammenwirken (12) der Karte mit einer separaten Einheit, die einem elektronischen Zahlungsendgerät entspricht, und Authentifizieren (12) der separaten Einheit durch die Karte, wobei das Authentifizieren einem Schritt des Umsetzens einer vollständigen Transaktion über das elektronische Zahlungsendgerät entspricht;
• Übermitteln (13) des gespeicherten verdächtigen Status durch die Karte an die authentifizierte separate Einheit, die dem elektronischen Zahlungsendgerät entspricht.

2. Verfahren zur Erkennung nach Anspruch 1, **dadurch gekennzeichnet, dass** der Schritt des Erkennens gesichert wird und dass das Speichern des verdächtigen Status in einem spezifischen geschützten Bereich des Speichers der Karte derart umgesetzt wird, dass das Speichern, unabhängig von den Vorgängen, die umgesetzt werden, gewährleistet wird.

3. Verfahren zur Erkennung nach einem der Ansprüche 1 bis 2, **dadurch gekennzeichnet, dass** der Schritt des Übermittelns einen Unterschritt des Übertragens mindestens eines Anzeigebefehls einer Warnmeldung auf einem Bildschirm der separaten Einheit aufweist.

4. Verfahren zur Erkennung nach einem der Ansprüche 1 bis 3, **dadurch gekennzeichnet, dass** es einen Schritt des Verarbeitens des verdächtigen Status, der von der Karte mitgeteilt wird, in der separaten Einheit aufweist.

5. Elektronische Bezahlkarte, umfassend Mittel zur automatischen Erkennung von versuchter Piraterie, **dadurch gekennzeichnet, dass** sie die folgenden Mittel aufweist:
• Mittel zum Erkennen (30) von einer Abfolge von verdächtigen Vorgängen, die in Zusammenwirken mit der Karte umgesetzt werden, umfassend Mittel zum Erkennen einer Abfolge von Vorgängen, die einer vorbestimmten Abfolge von Vorgängen nicht entspricht, die die vollständige Durchführung einer Banktransaktion erlaubt, und Mittel (31) zum Speichern eines entsprechenden Status in der Karte, der verdächtiger Status genannt wird;
• Mittel (32) zum Zusammenwirken der Karte mit einer separaten Einheit, die einem elektronischen Zahlungsendgerät entspricht, und Mittel (32) zum Authentifizieren der separaten Einheit durch die Karte, wobei die Mittel zum Authentifizieren Mitteln zum Umsetzen einer vollständigen Transaktion über das elektronische Zahlungsendgerät entsprechen;
• Mittel (33) zum Übermitteln des gespeicherten verdächtigen Status durch die Karte an die authentifizierte separate Einheit, die einem elektronischen Zahlungsendgerät entspricht.

6. Elektronisches Zahlungsendgerät, umfassend Mittel zum Verarbeiten eines verdächtigen Status, der von einer elektronischen Bezahlkarte nach Anspruch 5 empfangen wird, wobei die Mittel zum Verarbeiten aufweisen:
• Mittel zum Lesen des empfangenen verdächtigen Status,
• Mittel zum Ausführen von einem Befehl (von Befehlen), der (die) in dem empfangenen verdächtigen Status enthalten ist (sind),
• Mittel zum Senden einer Warnmeldung.

7. Computerprogrammprodukt, das von einem Kommunikationsnetz heruntergeladen werden kann und/oder auf einem computerlesbaren Medium aufgezeichnet ist und/oder von einem Mikroprozessor ausgeführt werden kann, **dadurch gekennzeichnet, dass** es Programmcodeanweisungen für das Ausführen eines Verfahrens nach einem der Ansprüche 1 bis 4 aufweist, wenn es auf einem Computer ausgeführt wird.

## Claims

1. Method for the auto-detection of an attempt to hack an electronic payment card, **characterized in that** it comprises the following steps implemented by said card:
• detecting (10) a sequence of suspect operations implemented in interaction with said card, comprising the detection of a sequence of operations that does not correspond to a predetermined sequence of operations enabling the full performance of a bank transaction, and storing (11) a corresponding status, called a suspect status, in the card;
• interaction (12) of said card with a distinct entity and authentication (12), by said card, of said distinct entity, said authentication corresponding to a step for implementing a full transaction via said electronic payment terminal;
• communication (13), by said card, of said stored suspect status, to said distinct authenticated entity corresponding to said electronic payment terminal.

2. Method of auto-detection according to claim 1, **characterized in that** said step for detecting is secured and said storage of said suspect status is done in a specific zone of the memory of said card, so that said storage is guaranteed whatever said performed operations.

3. Method of auto-detection according to any one of the claims 1 to 2, **characterized in that** said communications step comprises a sub-step of transmission of at least one command for displaying a warning message on a screen of said distinct entity.

4. Method of auto-detection according to any one of the claims 1 to 3, **characterized in that** it comprises a step of processing, in said distinct entity, of said suspect status communicated by said card.

5. Electronic payment card comprising means of auto-detection of a hacking attempt, **characterized in that** it comprises the following means:
• means (30) of detection of a sequence of suspect operations implemented in interaction with said card, comprising means of detection of a sequence of operations that does not correspond to a predetermined sequence of operations enabling the full performance of a bank transaction, and means (31) of storage in said card of a corresponding status, called a suspect status;
• means (32) of interaction of said card with a distinct entity, corresponding to an electronic payment terminal, and means (32) of authentication, by said card, of said distinct entity, said means of authentication corresponding to means of implementing a full transaction via said electronic payment terminal;
• means (33) of communication, by the card, of said stored suspect status to said distinct authenticated entity, corresponding to an electronic payment terminal.

6. Electronic payment terminal comprising means for processing a suspect status received from an electronic payment card according to claim 5, said means for processing comprising:
• means for reading said received suspect status ;
• means for executing command(s) included in said received suspect status ;
• means for sending out a warning message.

7. Computer program product downloadable from a communications network and/or stored on a computer-readable carrier and/or executable by a microprocessor, and comprising program code instructions for executing a method of auto-detection according to any one of the claims 1 to 4 when it is executed on a computer.
